# EUROPÄISCHE PATENTSCHRIFT

(11) **EP 3 117 987 B1**
(45) Veröffentlichungstag und Bekanntmachung des Hinweises auf die Patenterteilung: **16.05.2018**
(21) Anmeldenummer: 16159058.3
(22) Anmeldetag: 08.03.2016
(51) Int. Cl.: B29D 30/06, B60C 11/00, B29C 33/38, B29C 33/42

(54) **VERFAHREN ZUR HERSTELLUNG EINES GUSS-PROFILSEGMENTES EINER SEGMENTIERTEN VULKANISIERFORM FÜR FAHRZEUGREIFEN**
METHOD FOR PRODUCING A CASTING PROFILE SEGMENT OF A SEGMENTED VULCANIZING MOLD FOR VEHICLE TIRES
PROCEDE DE FABRICATION D'UN SEGMENT PROFILE COULE D'UN MOULE A SEGMENTS POUR LA VULCANISATION DE PNEUS

(30) Priorität: 13.07.2015 DE 102015213028
(43) Veröffentlichungstag der Anmeldung: 18.01.2017
(73) Patentinhaber: Continental Reifen Deutschland GmbH, 30165 Hannover (DE)
(72) Erfinder: Ciptokusumo, Joharsyah, 30165 Hannover (DE); Dzick, Jürgen, 30926 Seelze (DE); Ungureanu, Linda, 30419 Hannover (DE)
(74) Vertreter: Finger, Karsten

(56) Entgegenhaltungen:
- EP-B1- 2 234 782
- WO-A1-2010/096072
- JP-A- 2001 150 444
- JP-A- 2009 190 526
- US-A1- 2013 118 660

## Beschreibung

Die Erfindung betrifft ein Verfahren zur Herstellung eines Guss-Profilsegmentes einer segmentierten Vulkanisierform für Fahrzeugreifen, dessen Formfläche ein Segment des Laufstreifenprofils eines zu vulkanisierenden Reifens formt, wobei die Formfläche des Guss-Profilsegmentes eine definierte Rauhigkeit aufweist und wobei man das Guss-Profilsegment mit den folgenden Schritten erhält:
- Herstellen eines Urmodells, das das Positiv des zu vulkanisierenden Laufstreifenprofilsegmentes darstellt
- Abgießen des Urmodells zum Erhalt eines Silikon-Flexibles
- Abgießen des Silikon-Flexibles zum Erhalt eines Gießkernes
- Abgießen des Gießkernes zum Erhalt eines Guss-Profilsegmentes
- Zerstören des Gießkernes und Reinigung des Guss-Profilsegmentes. Offenbart wird ferner eine Vulkanisierform sowie ein Fahrzeugreifen.

Vulkanisierformen für Reifen bestehen unter anderem aus Profilsegmenten und Seitenschalen, welche gemeinsam die radial äußere Oberfläche des Reifens wie den Laufstreifen, den Schulterbereich und die Seitenwände formen. Die Segmente, welche den Laufstreifen formen, werden Profilsegmente genannt.

Der unvulkanisierte grüne Reifenrohling wird in der Vulkanisierform heizgepresst und durch Kautschukvernetzungsreaktionen in seinen endgültigen gummielastischen Zustand überführt. Dabei erhält der Reifen seine Profil- und Seitenwandgestaltung durch die entsprechende Negativgestaltung der Formflächen der Formsegmente.

Die Profilsegmente von gegossenen Vulkanisierformen für Reifen (= Guss-Profilsegment) bestehen üblicherweise aus Aluminium. Gegossene Vulkanisierformen werden insbesondere für Reifen mit aufwendiger Profilgestaltung für die Serienproduktion eingesetzt. Ein Reifen mit aufwendiger Profilgestaltung ist beispielsweise ein PKW-Winterreifen, der in seinen erhabenen Profilelementen Feineinschnitte aufweist. Diese Feineinschnitte werden durch in dem Negativ-Profil des Guss-Profilsegmentes eingegossene Lamellenbleche geformt. Ein Winterreifen kann bis zu 5000 solcher Lamellenbleche verschiedenster 2-dimensionaler oder 3-dimensionaler Geometrie aufweisen.

Das Fräsen solch aufwendiger Profilgestaltungen in ein Profilsegment und das nachträgliche Einsetzen von den Lamellenblechen in die Negativ-Lauffläche eines gefrästen Profilsegmentes wäre sehr kosten- und zeitaufwendig und im Ergebnis am Reifen qualitativ nachteilig, da die Lamellenbleche nie formschlüssig dicht in die Negativ-Lauffläche eingesetzt werden könnten. Es wären unerwünschte Gummiaustriebe am fertigen Reifen erhalten.

Es hat sich gezeigt, dass Reifen, deren mantelförmige Lauffläche mit einer definierten Rauhigkeit versehen sind, Vorteile hinsichtlich der Reifenperformance aufweisen. Insbesondere bei PKW-Winterreifen ergeben sich erhebliche Vorteile hinsichtlich des Bremsens auf Eis.

Aus der EP 2 234 782 B1 ist es bekannt, die Formflächen einer fertigen Vulkanisierform durch Aufbringen einer thermischen Spritzschicht, welche körnige Zusätze aufweist, mit einer definierten Rauhigkeit zu versehen.

WO 2010/096072 A1 betrifft ein Verfahren zur Herstellung eines mikrostrukturierten Endprodukts, wobei das Verfahren das Fabrizieren eines mikrostrukturierten Prototypen, Gießen eines Gummis vom mikrostrukturierten Prototypen, Gießen einer Keramik vom mikrostrukturierten Gummi, Gießen eines Metalls von der mikrostrukturierten Keramik, Gießen und Formen eines Endproduktmaterials vom mikrostrukturierten

Metall und Herstellen des mikrostrukturierten Endprodukts. Das mikrostrukturierten Endprodukt ist bevorzugt ein mikrostrukturierte Reifen (vgl. Anspruch 11).

JP 2009190526 A betrifft einen Reifen, welcher einen strukturierten Abschnitt aufweist, wobei der Abschnitt eine Rauheit Ra im Bereich von 6 bis 50 µm aufweist (vgl. Abstract) sowie eine entsprechende Vulkanisationsform mit einem unebenen Abschnitt mit einer Rauheit Ra im Bereich von 6 bis 50 µm (vgl. Abstract).

US 2013/118660 A betrifft ein "Formelement für eine Formwerkzeug für einen Reifen, der einen mit einer Vielzahl von Blöcken versehenen Laufstreifen aufweist, wobei jeder Block eine Kontaktfläche aufweist, die dazu bestimmt ist, beim Rollen mit einer Straße in Kontakt zu kommen, wobei die Formfläche eine Rauigkeit (Ra) zwischen 0,005 und 0,02 mm hat" (s. Anspruch 3). US 2013/118660 A betrifft auch ein Formwerkzeug umfassend das Formelement (vgl. Anspruch 6) und einen Reifen der von einem solchen Formwerkzeug geformt und vulkanisiert wurde (vgl. Anspruch 7).

EP 2 234 782 81 betrifft "eine Vulkanisierform für Reifen aus zumindest zwei Formsegmenten, deren Formflächen gemeinsam auch das Laufstreifenprofil eines zu vulkanisierenden Reifenformen und welche eine mantelförmige Fläche mit Erhebungen, wie vorzugsweise Stegen, aufweisen, wobei die mantelförmige Fläche die mantelförmige Laufstreifenprofilfläche des Reifens formt und wobei die Erhebungen die Vertiefungen, wie vorzugsweise Nuten, im Laufstreifenprofil des Reifens einprägen, wobei die das Laufstreifenprofil formenden Formflächen der Formsegmente bereichsweise mit einer Rauigkeit versehen sind" (s. Absatz [0001]) sowie "einen mit einer vorgenannten Vulkanisierform hergestellten Reifen" [s. Absatz [0002]).

Es ist die Aufgabe der Erfindung, ein alternatives Verfahren zur Herstellung von Guss-Profilsegmenten zur Verfügung zu stellen, deren Formflächen eine definierte Rauhigkeit aufweisen. Die Aufgabe wird gelöst, indem man auf die Formfläche des Silikon-Flexibles Teilchen definierter Teilchengröße zur Erzeugung der erwünschten Rauhigkeit aufbringt und dass man die Teilchen mit dem Silikon-Flexible fest verbindet.

Die auf das Silikon-Flexible aufgebrachte Rauhigkeit überträgt sich jeweils über die weiteren Verfahrens schritte bis auf die Formfläche des Guss-Profilsegmentes.

Die Rauhtiefe verringert sich über die dem Silikon-Flexible nachfolgenden Abgussverfahren, so dass auf dem Silikon-Flexible größere Teilchen aufgebracht werden müssen, als in der Rauhigkeit des Guss-Profilsegmentes erhalten wird.

Vorteilhaft ist es, wenn man die Teilchengröße auf dem Silikon-Flexible derart wählt, dass auf dem Laufstreifenprofil des heizgepressten Reifens ein Oberflächenprofil von 5 - 50 µm, vorzugsweise von 7,5 - 25 µm, besonders vorzugsweise von 10 - 12,5 µm erhalten ist.

In einem bestimmten Verfahren polymerisiert man Kohlenstoffteilchen auf das Silikon-Flexible auf.

In einem alternativen Verfahren klebt man Monomere auf die Oberfläche des Silikon-Flexible auf. Offenbart wird ebenfalls eine Vulkanisierform, welche nach dem vorgenannten Verfahren hergestellt ist. Offenbart wird ferner ein Fahrzeugreifen, welcher mit einer durch das Verfahren hergestellten Vulkanisierform heizgepresst ist.

Der Fahrzeugreifen ist vorzugsweise ein PKW-Sommerreifen, ein PKW-Winterreifen, ein Motorradreifen oder ein LKW-Reifen.

## Patentansprüche

1. Verfahren zur Herstellung eines Guss-Profilsegmentes einer segmentierten Vulkanisierform für Fahrzeugreifen, dessen Formfläche ein Segment des Laufstreifenprofils eines zu vulkanisierenden Reifens formt, wobei die Formfläche des Guss-Profilsegmentes eine definierte Rauhigkeit aufweist und wobei man das Guss-Profilsegment mit den folgenden Schritten erhält:
- Herstellen eines Urmodells, das das Positiv des zu vulkanisierenden Laufstreifenprofilsegmentes darstellt
- Abgießen des Urmodells zum Erhalt eines Silikon-Flexibles
- Abgießen des Silikon-Flexibles zum Erhalt eines Gießkernes
- Abgießen des Gießkernes zum Erhalt eines Guss-Profilsegmentes
- Zerstören des Gießkernes und Reinigung des Guss-Profilsegmentes
**dadurch gekennzeichnet, dass**
man auf die Formfläche des Silikon-Flexibles Teilchen definierter Teilchengröße zur Erzeugung der erwünschten Rauhigkeit aufbringt und dass man die Teilchen mit dem Silikon-Flexible fest verbindet.

2. Verfahren nach Anspruch 1, **dadurch gekennzeichnet, dass** die Teilchen eine Rauigkeit auf dem vulkanisierten Reifen erzeugen, welche durch ein Oberflächenprofil von 5 - 50 µm, vorzugsweise von 7,5 - 25 µm, besonders vorzugsweise von 10 - 12,5 µm gebildet ist.

3. Verfahren nach Anspruch 1 oder 2,
**dadurch gekennzeichnet, dass** man Kohlenstoffteilchen auf das Silikon-Flexible aufpolymerisiert.

4. Verfahren nach Anspruch 1 oder 2,
**dadurch gekennzeichnet, dass** man Monomere auf die Oberfläche des Silikon-Flexible aufklebt.

5. Verfahren zur Herstellung einer Vulkanisierform, umfassend die Verfahrensschritte nach einem oder mehreren der Ansprüche 1 bis 4.

6. Verfahren zur Herstellung eines Fahrzeugreifens, umfassend die Verfahrensschritte:
- Herstellen einer Vulkanisierform nach dem Verfahren gemäß Anspruch 5,
- Heizpressen des Fahrzeugreifens in der Vulkanisierform.

7. Verfahren nach Anspruch 6, **dadurch gekennzeichnet, dass** der Fahrzeugreifen ein PKW-Sommerreifen, ein PKW-Winterreifen, ein Motorradreifen oder ein LKW-Reifen ist.

## Claims

1. Method for producing a casting profile segment of a segmented vulcanizing mould for vehicle tyres, the moulding surface of which forms a segment of the tread profile of a tyre to be vulcanized, the moulding surface of the casting profile segment having a defined roughness and the casting profile segment being obtained by the following steps:
- producing a master model, which represents the positive of the tread profile segment to be vulcanized
- taking a casting from the master model to obtain a silicone flexible
- taking a casting of the silicone flexible to obtain a casting core
- taking a casting of the casting core to obtain a casting profile segment
- destroying the casting core and cleaning the casting profile segment
**characterized in that**
particles of a defined particle size for producing the desired roughness are applied to the moulding surface of the silicone flexible and **in that** the particles are securely bonded to the silicone flexible.

2. Method according to Claim 1, **characterized in that** the particles produce a roughness on the vulcanized tyre that is formed by a surface profile of 5-50 *µ*m, preferably of 7.5-25 *µ*m, particularly preferably of 10-12.5 *µ*m.

3. Method according to Claim 1 or 2,
**characterized in that** carbon particles are polymerized onto the silicone flexible.

4. Method according to Claim 1 or 2,
**characterized in that** monomers are adhesively attached to the surface of the silicone flexible.

5. Method for producing a vulcanizing mould, comprising the method steps according to one or more of Claims 1 to 4.

6. Method for producing a vehicle tyre, comprising the method steps of:
- producing a vulcanizing mould by the method according to Claim 5,
- hot pressing the vehicle tyre in the vulcanizing mould.

7. Method according to Claim 6, **characterized in that** the vehicle tyre is a summer car tyre, a winter car tyre, a motorcycle tyre or a truck tyre.

## Revendications

1. Procédé de fabrication d'un segment profilé de moulage d'un moule à segments pour la vulcanisation de pneumatiques de véhicules, dont la face de moulage forme un segment du profil de bande de roulement d'un pneumatique à vulcaniser, dans lequel la face de moulage du segment profilé de moulage présente une rugosité définie et dans lequel on obtient le segment profilé de moulage avec les étapes suivantes:
- fabrication d'un modèle initial, qui représente le positif du segment de profil de bande de roulement à vulcaniser,
- mouler le modèle initial pour obtenir un flexible en silicone,
- mouler le flexible en silicone pour obtenir un noyau de coulée,
- mouler le noyau de coulée pour obtenir un segment profilé de moulage,
- détruire le noyau de coulée et nettoyer le segment profilé de moulage,
**caractérisé en ce que** l'on dépose sur la face de moulage du flexible en silicone des particules présentant une taille de particules définie pour la production de la rugosité désirée et **en ce que** l'on assemble solidement les particules au flexible en silicone.

2. Procédé selon la revendication 1, **caractérisé en ce que** les particules produisent sur le pneumatique vulcanisé une rugosité, qui est formée par un profil de surface de 5 - 50 *µ*m, de préférence de 7,5 - 25 *µ*m, et de préférence encore de 10 - 12,5 *µ*m.

3. Procédé selon la revendication 1 ou 2, **caractérisé en ce que** l'on polymérise des particules de carbone sur le flexible en silicone.

4. Procédé selon la revendication 1 ou 2, **caractérisé en ce que** l'on colle des monomères sur la surface du flexible en silicone.

5. Procédé de fabrication d'un moule de vulcanisation, comprenant les étapes de procédé selon une ou plusieurs des revendications 1 à 4.

6. Procédé de fabrication d'un pneumatique de véhicule, comprenant les étapes de procédé suivantes:
- fabriquer un moule de vulcanisation par le procédé selon la revendication 5,
- presser à chaud le pneumatique de véhicule dans le moule de vulcanisation.

7. Procédé selon la revendication 6, **caractérisé en ce que** le pneumatique de véhicule est un pneu d'été pour voiture, un pneu d'hiver pour voiture, un pneu de motocyclette ou un pneu de camion.
